# EUROPEAN PATENT APPLICATION

(11) **EP 1 521 474 A2**
(43) Date of publication of application: **06.04.2005**
(21) Application number: 04023339.7
(22) Date of filing: 30.09.2004
(51) Int. Cl.: H04N 7/24

(54) **Data processing apparatus**

(30) Priority: 03.10.2003 JP 2003345852
(71) Applicant: Sanyo Electric Co., Ltd., Moriguchi-shi, Osaka (JP)
(72) Inventor: Tanaka, Satoshi, Kyotanabe-shi Kyoto (JP)
(74) Representative: Glawe. Delfs. Moll

(57) **Abstract**

A data processing apparatus includes a JPEG 2000 codec. The JPEG 2000 codec generates any one of an LRCP arrangement stream and an RLCP arrangement stream. A block rearrangement circuit rearranges data blocks forming the stream generated by the JPEG 2000 codec to generate another stream.

## Description

### BACKGROUND OF THE INVENTION

### Field of the invention

The present invention relates to data processing apparatuses. More specifically, the present invention relates to a data processing apparatus that performs a hierarchical encoding according to a JPEG 2000 system.

### Description of the prior art

In a JPEG 200 codec system, at a time of encoding, image signals are subjected to a wavelet transform, a quantization, and entropy coding to apply a degree of priority to each of encoded data. Then, the encoded data are arranged in order of the degree of priority to form a stream.

The degree of priority includes a layer (L), a resolution (R), a position (P), and a color component (C) of four kinds. The stream has a four hierarchical structure, and any one of the L, R, C and P is assigned to each of the hierarchy. Depending on which degree of priority is assigned to each of the four hierarchies, a plurality of scalabilities different from each other are realized.

For example, in a case of forming an LRCP arrangement stream in which the L is assigned to the hierarchy in the highest order, the R and the C are assigned to the next hierarchies one after another in this order, and the P is assigned to the hierarchy in the lowest order, at a time of performing a decoding, the encoded data is decoded in a unit of the layer from the layer in the highest order, capable of realizing the scalability of the SNR (signal-to-noise ratio).

Furthermore, in a case of forming an RLCP arrangement stream in which the R is assigned to the hierarchy in the highest order, the R and the C are assigned to the next hierarchies one after another in this order, and the P is assigned to the hierarchy in the lowest order, at a time of performing a decoding, the encoded data is decoded in a unit of the resolution level from the lowest layer in order, capable of realizing the scalability of the resolution.

An example of this kind of a conventional image recording apparatus utilizing the JPEG 2000 codec system having the above-described characters is disclosed in a Japanese patent Laying-open No. 2000-295577 laid-open on October 20, 2000. In the prior art, an image signal is encoded in the JPEG 2000 system, and from the encoded data, the RLCP arrangement stream is formed. Then, the formed stream is recorded on the recording medium. Thereafter, in response to a reproducing request, the stream is read from the recording medium, and the read stream is decoded into the image signal.

In a case that a low resolution image is requested, a head portion of the stream, that is, only the encoded data of the low resolution level is decoded. In a case that a high resolution image is requested, the rest of the stream, that is, the encoded data of the high resolution is also decoded. Thus, images having different resolutions from the low resolution image at the lowest area to the high resolution image comparable to an original image can be reproduced in compliance with demands from users one by one.

However, in the above-described prior art, it is impossible to reproduce images having different SNRs from each other. This is because it is only the RLCP arrangement stream that is recorded on the recording medium. In another prior art also, only one arrangement stream alternatively selected can be dealt.

Herein, the data processing apparatus capable of generating both of the RLCP arrangement stream and the LRCP arrangement stream is required. However, in order to attain this, the same image has to be encoded twice, and it takes a long processing time to perform the encoding, resulting in loss of comfortableness for the users.

Especially, for the encoding according to the JPEG 2000 system, it takes a long processing time twice or three times as long as an encoding process in a conventional JPEG system, resulting in considerably loss of the comfortableness. In a case that a plurality of still images forming a motion image are successively encoded by the JPEG 2000 codec, the comfortableness is even more lost.

### SUMMARY OF THE INVENTION

Therefore, it is a primary object of the present invention to provide a novel data processing apparatus.

Another object of the present invention is to provide a data processing apparatus capable of reproducing an image in various image qualities without comfortableness for users.

A data processing apparatus according to the invention, comprising: an encoder for encoding input data to generate a first data block arrangement including a plurality of data blocks arranged in a first manner; an rearranger for rearranging the data blocks forming the first data block arrangement to generate a second data block arrangement including a plurality of data blocks arranged in a second manner; an accepter for accepting a transmission request of the data block arrangements; a first determiner for determining which is requested by the transmission request, the first data block arrangement or the second data block arrangement; and a transmitter for transmitting the data block arrangement depending on the determination result of the first determiner.

First, the encoder performs an encoding on the input data to generate the first data block arrangement including the plurality of data blocks arranged in the first manner. Next, the rearranger performs a rearrangement on the data blocks forming the first data block arrangement to generate the second data block arrangement including the plurality of data blocks arranged in the second manner. Then, when the accepter accepts the transmission request of the data block arrangement, the first determiner determines which is requested by the transmission request, the first data block arrangement or the second data block arrangement, and the transmitter transmits the data block arrangement depending on the determination result.

Generally, it takes a less time in rearranging the data blocks than in generating the data block arrangement by performing the encoding. According to this invention, by rearranging the first data block arrangement obtained by the encoding, the second block arrangement is generated, and therefore, a processing time is shorten in comparison with a case in which both of the first and second data block arrangements are generated by the encoding.

Preferably, a data processing apparatus further comprises the recorder for recording on the recording medium the first data block arrangement encoded by the encoder, and the rearranger executes a rearrangement depending on the determination result by the first determiner when accepting the transmission request.

The first data block arrangement is recorded on the recording medium, and read from the recording medium when the accepter accepts transmission request. The first data block arrangement read from the recording medium is applied to the transmitter or the rearranger depending on the determination result of the first determiner. When the first data block arrangement is applied to the rearranger, the rearranger rearranges the first data block arrangement to generate the second block arrangement. The second block arrangement generated by the rearranger is applied to the transmitter.

The rearrangement is executed only in a case that the second block arrangement is requested by the transmission request, and therefore, the processing speed is further shortened.

Preferably, the rearranger includes the extractor for extracting the data blocks from the first data block arrangement in order of the second manner, and the arranger for arranging the data blocks extracted by the extractor from the top in order.

The extractor extracts the data blocks from the first data block arrangement in order of the second manner, and the arranger arranges the extracted data blocks from the top in order. The second data block arrangement can be generated by such the simple rearrangement process, and therefore, it is possible to further shorten the processing time.

More preferably, a data processing apparatus further comprises a second determiner for determining how many data blocks are requested by the transmission request, wherein the rearranger controls the number of data blocks to be rearranged corresponding to the determination result by the second determiner.

The second determiner determines how many data blocks are requested by the transmission request. The rearranger controls the number of data to be rearranged corresponding to such the determination result, and therefore, a processing amount for the rearrangement is reduced, capable of further shortening a processing time.

In a preferable embodiment, the input data is still image data, and the encoder performs a hierarchical encoding on the still image data on the basis of a plurality of image quality parameters including a resolution and an SNR.

The first data block arrangement is a data block arrangement subjected to a hierarchical encoding by regarding one of the plurality of image quality parameters as a top priority, and the second data block arrangement is a data block arrangement subjected to the hierarchical encoding by regarding another of the plurality of image quality parameters as a top priority.

When the data block arrangement is decoded at the transmission destination of the data block arrangement, any one of the plurality of scalabilities including the resolution and the SNR is realized. Thus, a terminal that receives the data block arrangement to reproduce an image specifies which it requires out of the first data block arrangement or the second data block arrangement, and how many data blocks forming the data block arrangement it requires, and whereby, it is possible to reproduce an image with a desired image quality out of various image qualities including various resolutions and SNRs.

The hierarchical encoding complies with a JPEG 2000 system.

The input data is encoded according to the JPEG 2000 system. In a case of performing an encoding by the JPEG 2000 system, it takes a long time for the process twice or three times as long as an encoding process in a conventional JPEG system, for example. Thus, an effect of reducing the processing time caused by the rearrangement by generating the second data block arrangement is more prevalent.

The still image data is image data of a single screen forming a motion image.

The encoding is successively performed on a plurality of screens of image data, and therefore, an effect of reducing the processing time caused by the rearrangement by generating the second data block arrangement is more prevalent.

According to the present invention, the first data block arrangement and the second data block arrangement having different arrangements from each other can be generated in a short processing time, and therefore, it is possible to reproduce an image in various image qualities without comfortableness.

The above described objects and other objects, features, aspects and advantages of the present invention will become more apparent from the following detailed description of the present invention when taken in conjunction with the accompanying drawings.

### BRIEF DESCRIPTION OF THE DRAWINGS

Figure 1 is a block diagram showing a configuration of one embodiment of the present invention;
Figure 2 is an illustrative view showing a content of a rearrangement setting value register;
Figure 3 is an illustrative view showing one example of a table for recording;
Figure 4 is an illustrative view showing one example of a table for reproducing;
Figure 5 is an illustrative view showing one example of a wavelet transform;
Figure 6 (A) is an illustrative view showing a data structure of LRCP arrangement stream;
Figure 6 (B) is an illustrative view showing a data structure of RLCP arrangement stream;
Figure 7 is an illustrative view showing a transformation from the LRCP arrangement stream into the RLCP arrangement stream by rearranging blocks according to the present invention;
Figure 8 is an illustrative view showing a transformation from the RLCP arrangement stream into the LRCP arrangement stream by rearranging blocks according to the present invention;
Figure 9 is an illustrative view showing a mapping state of an SDRAM;
Figure 10 is an illustrative view showing another mapping state of the SDRAM;
Figure 11 is an illustrative view showing the other mapping state of the SDRAM;
Figure 12 is an illustrative view showing a further mapping state of the SDRAM;
Figure 13 is a flowchart showing a part of the process by a CPU; and
Figure 14 is a flowchart showing another part of the process by the CPU.

### DETAILED DESCRIPTION OF THE PREFERRED EMBODIMENTS

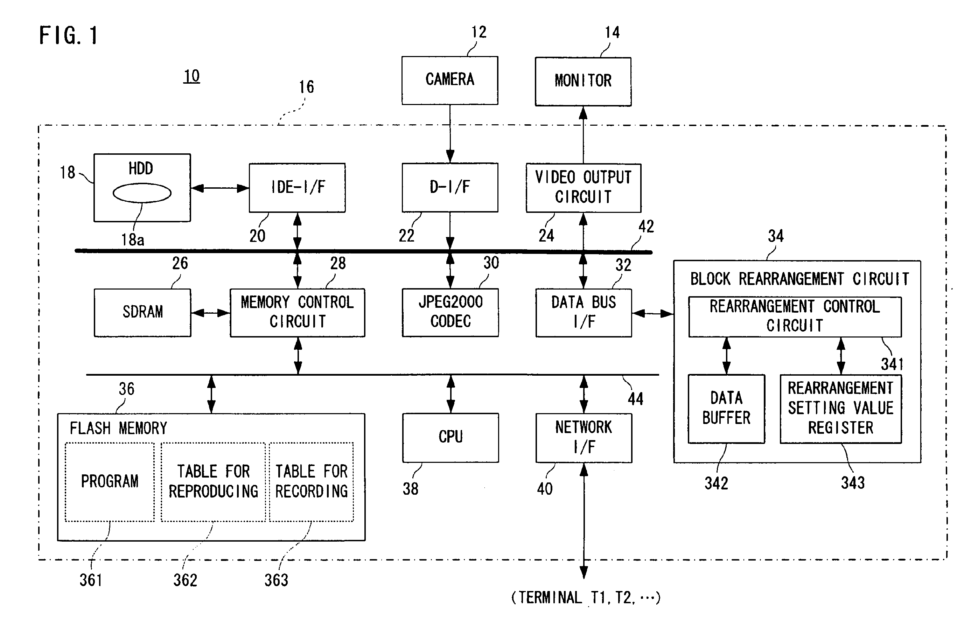

Referring to Figure 1, a surveillance camera system 10 according to this embodiment consists of a camera 12, a monitor 14 and a server 16. The camera 12 photographs an object scene, and outputs an image signal to a server 16. The monitor 14 inputs the image signal from the server 16, and displays the object scene imaged by the camera 12.

The server 16 includes two data buses 42 and 44. The data bus 42 is connected with a JPEG 2000 codec 30, and the data bus 44 is connected with a CPU 38 and a flash memory 36.

The data bus 42 is connected with an HDD 18 via an IDE-I/F 20, the camera 12 via a D-I/F 22, the monitor 14 via a video output circuit 24, an SDRAM 26 via a memory control circuit 28, and a block rearrangement circuit 34 via a data bus I/F 32.

The data bus 44 is connected with the SDRAM 26 via the memory control circuit 28. The data bus 44 is further connected with terminals T1, T2 ···via a network I/F 40 and a network not shown.

It is noted that the in the server 16, the data bus 44 other than the data bus 42 connected with the CPU 38 and the network I/F 40 is connected with a group of high-speed hardware dedicated for image processing such as the JPEG 2000 codec 30, the block rearrangement circuit 34, and so on and whereby, an image processing speed is intended to be improved. The hardware connected to the data bus 42 and the hardware connected to the data bus 44 can exchange data with each other through the memory control circuit 28.

Hereafter, a description is made on the components constituting the server 16 one by one.

The D-I/F 22 converts an image signal from the camera into a signal applicable to the data bus 42. The video output circuit 24 converts the image signal from the data bus 42 into a signal applicable to the monitor 14.

The IDE-I/IF 20 controls the HDD 18 in response to an instruction of the CPU 38. The HDD 18 records a stream from the data bus 42 on an HD 18a according to the control of the IDE-I/F 20, reads the stream from the HD 18a, and outputs it to the data bus 42.

The network I/F 40 transmits a stream from the data bus 44 to the terminals T1, T2, ···via a network in response to an instruction of the CPU 38. The data bus I/F 32 interfaces the exchange of data between the rearrangement control circuit 341 and the data bus 42.

The SDRAM 26 includes a plurality of storage areas (banks), and into the plurality of storage areas, an image signal to which an encoding has not yet performed, a stream obtained by the encoding, and a stream to which the block rearrangement processing has been performed are stored one by one.

The memory control circuit 28 writes the image signal and the stream from the data bus 42 to the SDRAM 26 in response to an instruction of the CPU 38, and reads the image signal and the stream from the SDRAM 26 so as to output them to the data bus 42 or the data bus 44. Furthermore, the memory control circuit 28, while receiving a request from the rearrangement control circuit 341, reads data from a place (copy source address) designated within the SDRAM 26 and outputs it to the data bus 42, and writes the data from the data bus 42 to a place (copy destination address) within the SDRAM 26.

The JPEG 2000 codec 30 encodes the image signal input from the data bus 42 according to the JPEG 2000 system, and outputs the stream obtained by the encoding process to the data bus 42. It is noted that a detailed description about the encoding and decoding processes is made later.

The block rearrangement circuit 34 includes the rearrangement control circuit 341, a data buffer 342, and a rearrangement setting value register 343. The rearrangement control circuit 341 sets to the rearrangement setting value register 343 a parameter value referred when the memory control circuit 28 performs a copy. The rearrangement control circuit 341 further fetches the data output from the SDRAM 26 to the data bus 42 by the memory control circuit 28 in response to the instruction thereof, and temporarily stores the fetched data in the data buffer 342.

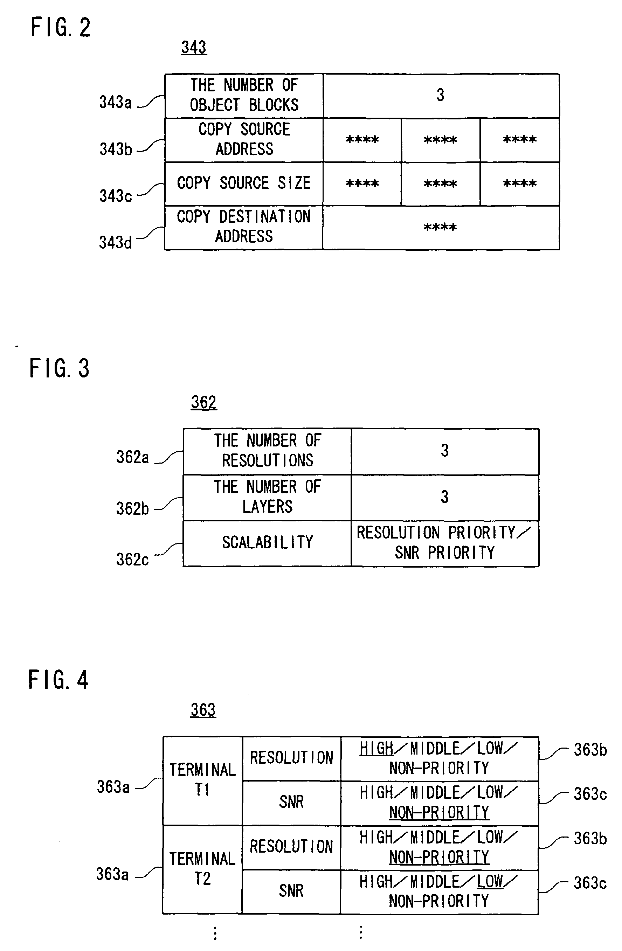

The content of the rearrangement setting value register 343 is shown in Figure 2. Referring to Figure 2, the number of object blocks 343a indicative of the number of the blocks as an object to be copied from now, a copy source address 343b indicative of a place to which each of the copy object blocks is stored now, a copy source size 343c indicative of a data size of each of the copy object blocks, and a copy destination address 343d indicative of a place to which the copy object blocks read and compiled is newly written are set to the rearrangement setting value register 343. It is noted that the number of copy object blocks is three in this embodiment, and three values are set to each of the copy source address 343b and the copy source size 343c.

The block rearrangement circuit 34 thus configured copies and rearranges in a block unit the stream stored in the SDRAM 26 to generate a stream with another arrangement within the SDRAM 26. Thus, two kinds of streams having an LRCP arrangement and an RLCP arrangement with respect the same image are thus stored in the SDRAM 26. It is noted that a detailed description of the block rearrangement process is made later.

In the flash memory 36, a program describing a procedure of the processing of the CPU 38, a table for recording 362 and a table for reproducing 363 explained later are stored.

One example of the table for recording 362 is shown in Figure 3. Referring to Figure 3, to the table for recording 362, the number of resolution levels 362a, the number of layers 362b, and scalability 362c are set as a parameter to be referred when the encoding process is performed. An arbitrary integral more than 1 is set to each of the number of resolution levels 362a and the number of layers 362b. Here, each of the values of the parameter is 3 as one example. As the scalability 362c, any one of the "resolution priority" and "SNR priority" is selected.

One example of the table for reproducing 363 is shown in Figure 4. Referring to Figure 4, the table for reproducing 363 is divided into cells 363a, 363a, ···corresponding to the terminals T1, T2, ···. Then, a resolution 363b and an SNR 363c relating to the scalability to be desired are set to each of the cells 363a, 363a ···. As setting values of the resolution 363b and the SNR 363c, high, middle, low, and non-priority is available. It is noted that setting the values is performed with respect to each of the terminals T1, T2, ···, for example. Upon setting, any one of the high, middle, and low is selected with respect to one of the resolution 363b or the SNR 363c, and the non-priority is applied to the other. In this embodiment, the "high resolution" is set to the terminal T1, and the "low SNR" is set to the terminal T2.

The CPU 38 controls each of the components described above according to the program 361 within the flash memory 36. Thus, in the server 16, a various image processing such as an image recording, an image reproducing, an image delivery, and etc. are realized.

Hereafter, the above-described encoding process and decoding process are described in detail. More specifically, the JPEG 2000 codec 30 encodes an image signal in a following procedure. First, the JPEG 2000 codec 30 performs a wavelet transform on the image signal. Thus, the image signal is subjected to a subband decomposition in a horizontal direction and a vertical direction a predetermined times.

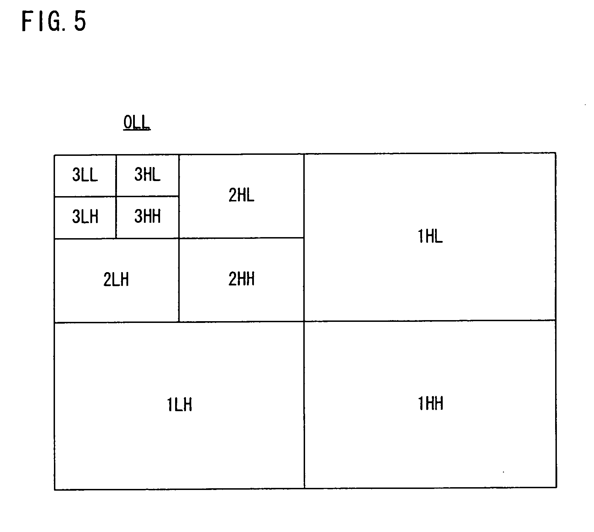

One example of the wavelet transform is shown in Figure 5. Referring to Figure 5, in a case that the subband decomposition is executed three times, that is, the decomposition level is three, an original image (0LL) is first decomposed into four subbands (1LL, 1HL, 1LH, and 1HH). Then, the subband of 1LL is decomposed into four subbands (2LL, 2HL, 2LH, and 2HH), and the subband of 2LL is decomposed into four subbands (3LL, 3HL, 3LH, and 3HH). That is, the original image is decomposed into ten subbands of 3LL, 3HL, 3LH, 3HH, 2HL, 2LH, 2HH, 1HL, 1LH, and 1HH.

Next, the JPEG 2000 codec 30 quantizes each of the subbands obtained by the wavelet transform, and then, performs entropy coding on each of quantized subbands. In the entropy coding, each quantized subband is divided into a plurality of layers depending on a degree of contribution to improvement of the SNR in the reproduced image. The number of layers is three in this embodiment.

The layers is called a layer 1, a layer 2 ···in the descending order from the layer having the highest degree of contribution to the improvement of the SNR. The image having a minimum SNR is reproduced by the data belonging to the layer 1 in the highest order, and by sequentially adding the data in the low order layer to the image, the SNR of the image is gradually improved.

Thus, a total amount of 30 data blocks including 10 of the subbands 3LL-1HH belonging to the layer 1, 10 ofthe subbands 3LL-1HH belonging to the layer 2, and 10 of the subbands 3LL-1HH belonging to the layer 3 are generated.

Next, the JPEG 2000 codec 30 arranges, in a predetermined order, the data blocks of 30 obtained in the above-described manner, and forms a stream by attaching additional information such as a header, and the like to it.

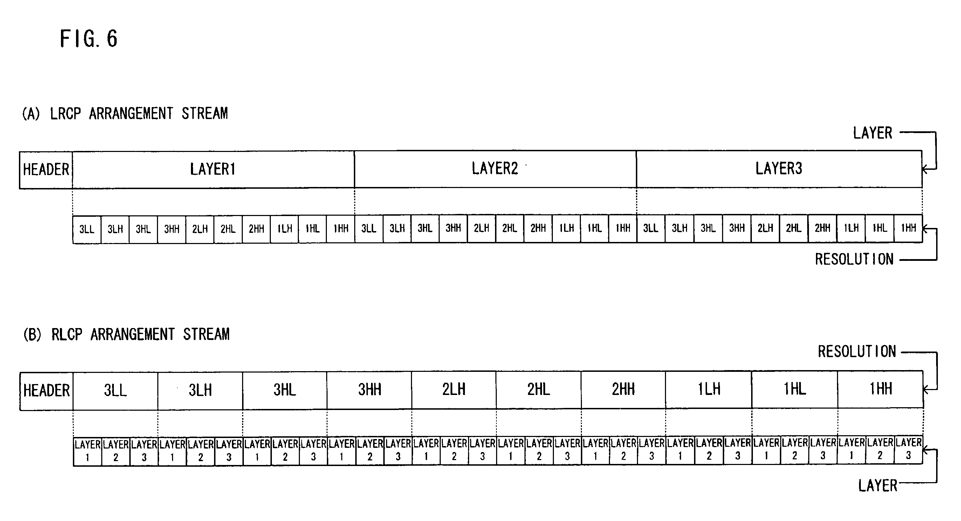

The data structure of the stream formed by the JPEG 2000 codec 30 is shown in Figure 6 (A) and Figure 6 (B). Figure 6 (A) shows an LRCP arrangement stream, and Figure 6 (B) shows an RLCP arrangement stream. The L, R, P, and C mean a layer, a resolution, a position, a color component, respectively. The position and the color component are omitted.

Referring to Figure 6 (A), in the LRCP arrangement stream, the 10 subbands of 3LL-1HH belonging to the layer 1 are arranged at a head position next to the header in this order. Next thereto, the 10 subbands 3LL-1HH belonging to the layer 2, and the 10 subbands 3LL-1HH belonging to the layer 3 are arranged.

Referring to Figure 6 (B), in the RLCP arrangement stream, three layers 1-3 constituting the subband 3LL are arranged in this order at a head position next to the header. Next thereto, three layers 1-3 constituting the subband 3LH are arranged, and thereafter, the same arrangement is repeated with respect to the subband 3HL to the last subband 1 HH.

It is noted that at a time of decoding the JPEG 2000 stream, the JPEG codec 30 performs a reverse processing to the above-described encoding processing.

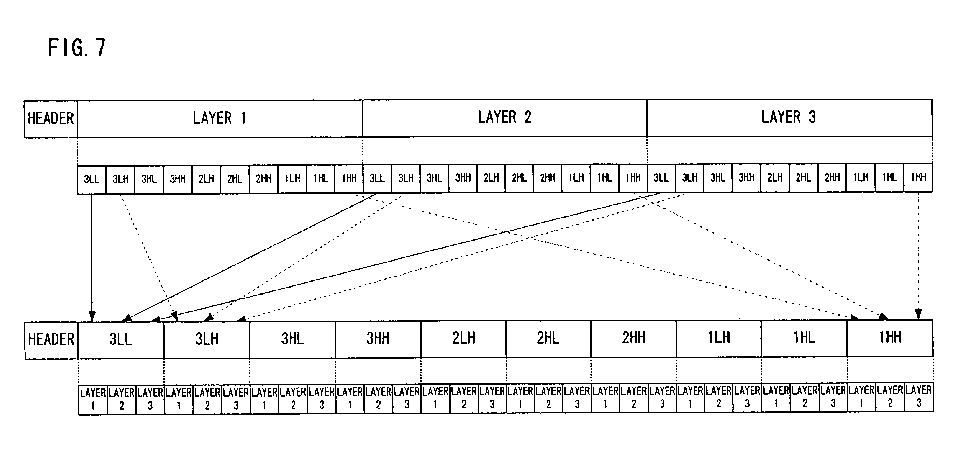

Hereafter, a description is made on the above-described block rearrangement processing. Figure 7 shows a conversion from the LRCP arrangement stream into the RLCP arrangement stream by the block rearrangement according to the present invention. Referring to Figure 7, the block of 3LL is picked from each of the layers 1-3 constituting the LRCP arrangement stream. The picked three blocks are compiled and arranged immediately after the header.

Next, the block of 3LH is picked from each of the layers 1-3. The picked three blocks are compiled, and arranged immediately after the blocks of 3LL. Hereafter, with respect to the 3HL-1HH, three blocks are complied and arranged in order in the above-described manner. Thus, the RLCP arrangement stream is formed.

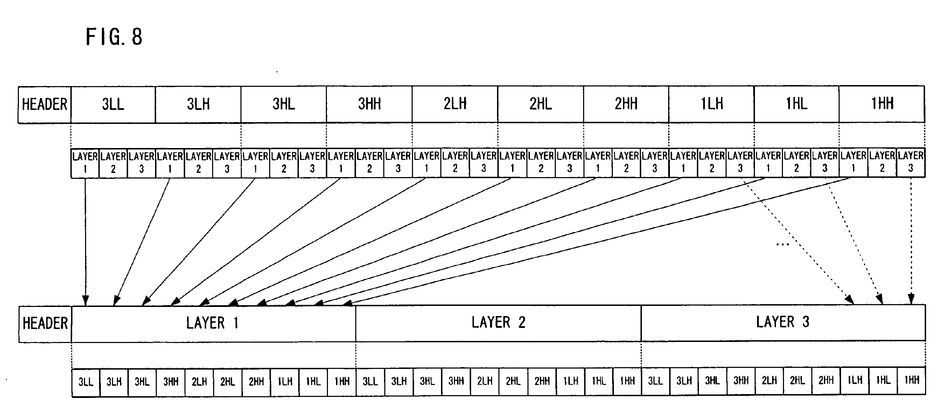

Figure 8 shows a conversion from the RLCP arrangement stream into the LRCP arrangement stream by the block rearrangement according to the present invention. Referring to Figure 8, first, the block belonging to the layer 1 is picked from each of the 10 subbands 3LL-1HH constituting the RLCP arrangement stream. The picked 10 blocks are compiled and arranged immediately after the header.

Next, the blocks belonging to the layer 2 are picked from each of the subbands 3LL-1HH. The picked 10 blocks are compiled, and arranged immediately after the group of blocks belonging to the layer 1. Then, the blocks belonging to the layer 3 are picked from each of the 10 subbands 3LL-1HH. The picked 10 blocks are complied, and arranged immediately after the group of the blocks belonging to the layer 2. Thus, the LRCP arrangement stream is formed.

The rearrangement control circuit 341 specifically executes the above-described rearrangement of the blocks in the following procedure. When receiving the instruction of the rearrangement from the CPU 38, first, the rearrangement control circuit 341 sequentially sets the values of the number of the blocks 343a, the copy source address 343b, the copy source size 343c, and the copy destination address 343d to the rearrangement setting value register 343 (see Figure 2). Then, the rearrangement control circuit 341 requests the memory control circuit 28 to read the data.

In response thereto, the memory control circuit 28 reads data of the object block from the SDRAM 26 with referring to the number of the blocks 343a, the copy source address 343b, and the copy source size 343c, and then transmits the read data to the data buffer 342 within the rearrangement circuit 34.

The rearrangement control circuit 341 determines whether or not another block to be rearranged is present after accepting that the data of the object block is stored in the data buffer 342. If the determination result is affirmative, the rearrangement control circuit 341 sets the values to the rearrangement setting value register 343 once again, and request the memory control circuit 28 to read the data.

If the determination result is negative, that is, if the data of all the blocks as a rearrangement object are stored in the data buffer 342, the rearrangement control circuit 341 requests the memory control circuit 28 to write the data. In response thereto, the memory control circuit 28 writes all the object blocks in a complied manner to the SDRAM 26 with referring to the copy destination address 343d set in the rearrangement setting value register 343.

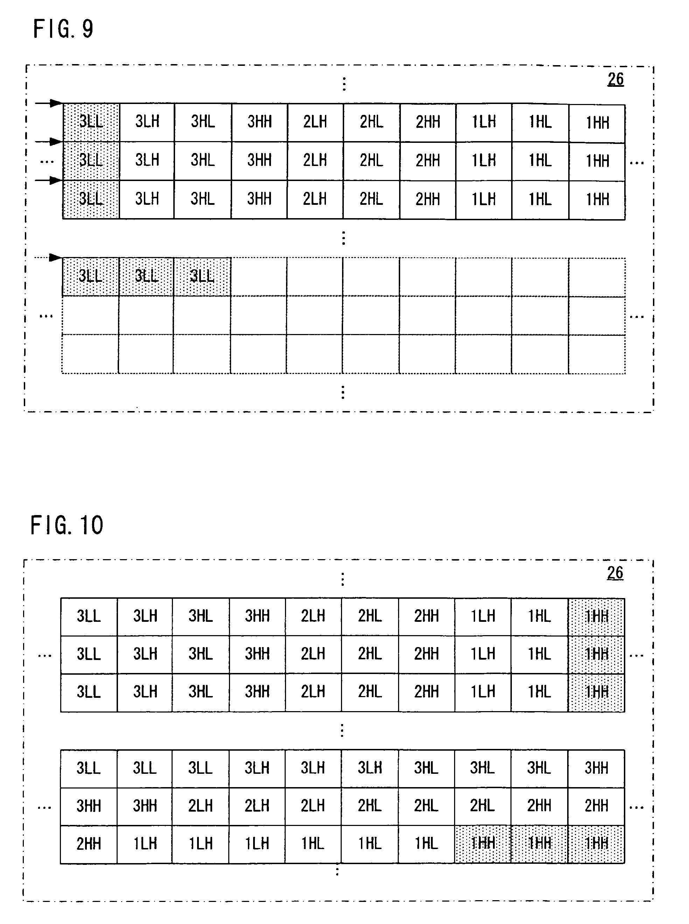

Figure 9 and Figure 10 show a mapping state of the SDRAM 26 when the rearrangement is performed from the LRCP arrangement to the RLCP arrangement. Referring to Figure 9, first, only the LRCP arrangement stream having a configuration shown in Figure 6 (A) is stored in the SDRAM 26. Three solid line arrows shown in Figure 9 indicate three copy source addresses 343b set in the rearrangement setting value register 343. Dotted line arrow indicates the copy destination address 343d.

In the rearrangement processing, three 3LL blocks stored separately at the places indicated by the solid line arrows are compiled and copied at the position indicated by the dotted line arrow. Then, three 3LH blocks are compiled and copied directly after the three 3LL blocks. Subsequently, another three blocks are in turn compiled and copied similarly to the above-described manner. Consequently, as shown in Figure 10, the RLCP arrangement stream having a configuration shown in Figure 6 (B) is further stored in addition to the LRCP arrangement stream in the SDRAM 26.

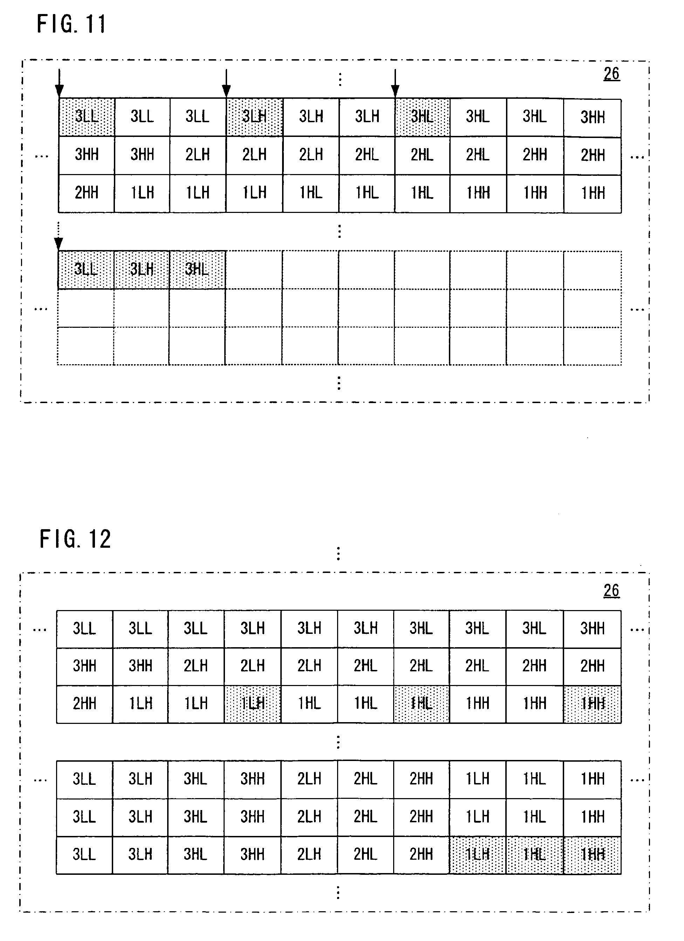

Figure 11 and Figure 12 show a mapping sate of the SDRAM 26 at a time of performing the rearrangement from the RLCP arrangement to the LRCP arrangement. Referring to Figure 11, only the RLCP arrangement stream having a configuration shown in Figure 6 (B) is stored in the SDRAM 26. Three solid line arrows indicate three copy source addresses 343b set in the rearrangement setting value register 343. Dotted line arrow indicates the copy destination address 343d.

In the rearrangement processing, first, three blocks of 3 LL, 3LH, and 3HL stored separately at the places indicated by the solid line arrows are compiled and copied at the place indicated by the arrow in dotted line. Then, 3HH, 2LH, and 2HL are compiled and copied directly after the above-described three blocks. Subsequently, another three blocks are in turn compiled and copied similarly to the above-described manner. Consequently, as shown in Figure 12, the LRCP arrangement stream having a configuration shown in Figure 6 (A) is further stored in the SDRAM 26 in addition to the RLCP arrangement stream.

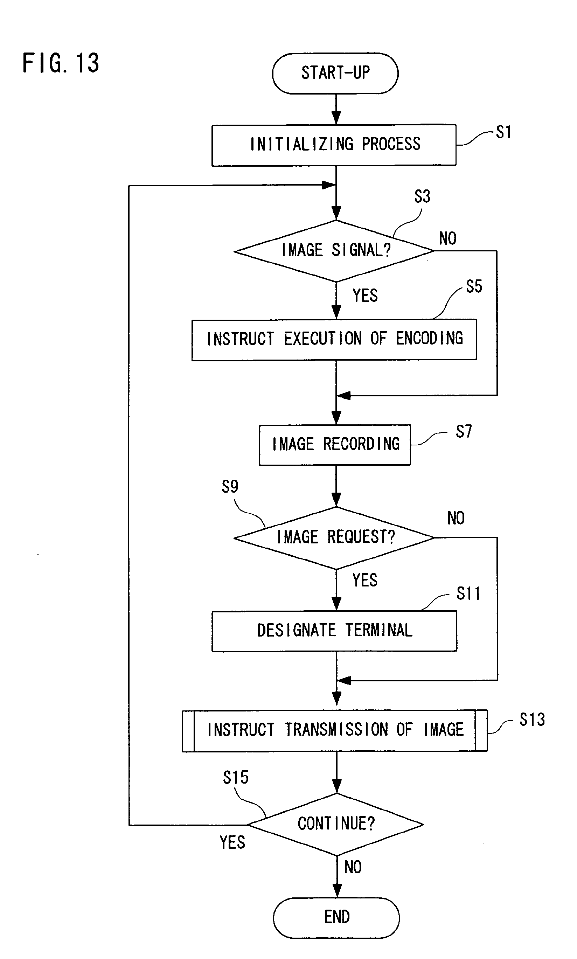

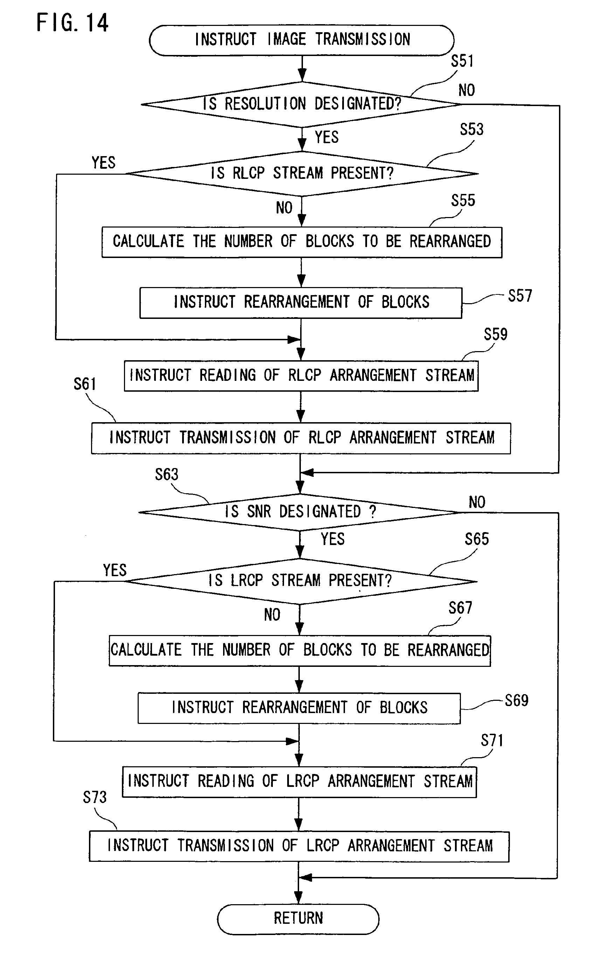

A description is made later on an entire operation of the surveillance camera system 10 configured as the above-described manner on the basis of a processing flowchart of the CPU 38 shown in Figure 13 and Figure 14.

The surveillance camera system 10 is utilized in an office building, collective housing, and so on, for example. The camera 12 is set at an entrance, a passage, and so on, for example, and the server 16 and the monitor 14 are set at an administrative room, for example. It is noted that the camera 12 is not limited to one. In a case of setting a plurality of cameras 12, each of the cameras 12, 12, ··· is connected to a D-I/F 22 via a multiplexer not shown.

The server 16 is , as necessary, connected to the terminal T1, T2, ···placed inside/outside the building via an intranet or the Internet. Thus, the user can monitor surveillance images from the external terminals T1, T2, ··· as well as the monitor 16 in the administrative room.

The CPU 38 specifically executes a flowchart in Figure 13 and Figure 14 according to the program 361 of the flash memory 36. Referring to Figure 13, when the server 16 is activated, the CPU 38 performs an initialization process in a step S1. The initialization process includes processes such as instructing the memory control circuit 28 to perform the initialization process of the SDRAM 26, instructing the network I/F 40 to establish a connection with the network, setting an initial parameter to the JPEG 2000 codec 30, and so forth.

Then, the camera 12 is started-up, and an image signal output from the camera 12 is fetched in the server 16 through the D-I/F 22. In a step S3, the CPU 38 determines whether or not the image signal from the camera 12 is input to the D-I/F 22. If the determination result is affirmative, the process proceeds to a step S5, and if the determination result is negative, the process proceeds to a step S7.

In the step S5, the CPU 38 instructs the memory control circuit 28 and the JPEG 2000 codec 30 to execute an encoding process. By this instruction, any one of the LRCP arrangement and the RLCP arrangement is designated. In response thereto, the memory control circuit 28 and the JPEG 2000 codec 30 perform a process described later.

The memory control circuit 28 writes the fetched image signal to the SDRAM 26, then reads the image signal from the SDRAM 26, and inputs it to the JPEG 2000 codec 30. It is noted that the image signal read at this time is also applied to the video output circuit 24 to display a live image on the monitor 14.

The JPEG 2000 codec 30 performs an encoding on a stream designated by the CPU 38 out of the LRCP arrangement and the RLCP arrangement. The stream output from the JPEG 2000 codec 30 is written to the SDRAM 26 once again by the memory control circuit 28.

In a step S7, the CPU 38 writes the stream temporarily stored in the SDRAM 26 to the HD 18a through the memory control circuit 28 and the IDE-I/F 20.

Now, the terminals T1, T2, ··· declare in advance an image quality at a time of viewing the image against the server 16, and in the flash memory of the server 16, the table for reproducing 363 (see Figure 4) describing the image quality declared by the respective terminals T1, T2, ···is stored.

The terminals T1, T2, ··· transmit a request signal to the server 16 in a case of viewing the image imaged by the camera 12. An identifier of the terminal and an identifier of the image, that is, the number of the camera 12 and an imaging time/date are attached to the request signal, for example.

In a step S9, the CPU 38 determines whether or not the request signal is transmitted from the terminals T1, T2, ···to the network I/F 40. If the determination result is affirmative, the process proceeds to a step S11, and if the determination result is negative, the process proceeds to a step S 13.

In the step S11, the CPU 38 analyzes the content of the request signal received by the network I/F 40, and specifies a terminal of the transmission sources on the basis of the result of the analysis. In the step S13, the CPU instructs the IDE-I/F 20, the memory control circuit 28, the JPEG 2000 codec 30, the rearrangement control circuit 341, and the network I/F 40 to execute an image transmission to the specified terminal. Then, the process proceeds to a step S 15.

In the step S 15, the CPU 38 determines whether or not the process is continued. If it is determined that the process is continued, the process returns to the step S3 to repeat the above-described processing.

The above-described image transmitting instruction in the step S 13 is executed according to a subroutine in Figure 14. Referring to Figure 14, the CPU 38 determines whether or not the terminal specified in the step S 11 designates a resolution on the basis of the table for reproducing 363 (see figure 4) in a step S51. If the determination result is affirmative, the process proceeds to a step S53, and if the result is negative, the process proceeds to a step S63.

In the step S53, it is determined whether or not the RCLP arrangement stream of the specified image is stored within the SDRAM 26 or the HD 18a. If the determination result is negative, the process proceeds to a step S55, and if the result is affirmative, the process proceeds to a step S59.

In the step S55, the CPU 38 calculates the number of blocks to be rearranged on the basis of the table for reproduction 363. For example, with respect to the view request from the terminal T1, the "high resolution" is registered in the table for reproducing 363, and whereby, all the subbands (3LL-1HH) of the RLCP arrangement stream arranged as shown in Figure 6 (B) have to be transmitted. The number of blocks per one subband is three, and thus, the number of the blocks to be rearranged is calculated to be 30 = 3 × 10. If the "middle resolution" is registered, the subbands 3LL-2HH have to be transmitted, and the number of blocks to be rearranged becomes 21=3 × 7. Similarly, if the low resolution is registered, the subbands 3LL-3HH have to be transmitted, and therefore, the number of the blocks to be rearranged becomes 12=3 × 4.

In a step S57, the CPU 38 instructs the memory control circuit 28 and the block rearrangement circuit 34 to execute the block rearrangement process. By the executing instruction, the number of blocks to be rearranged is designated. Then, the process proceeds to a step S59.

In response thereto, the memory control circuit 28 and the arrangement control circuit 341 execute a following rearrangement process. First, the rearrangement control circuit 341 sets the values of the parameter to the rearrangement setting value register 343 ("3" in Figure 2). More specifically, first, the number of the object blocks ("3" in Figure 2) designated by the CPU 38 is set to the number of the blocks 343a. Next, the values as many as the number of the blocks 343a (3 values in Figure 2) are set to each of the copy source addresses 343b and the copy source size. Then, a single value is set to the copy destination address 343d.

The memory control circuit 28 reads out the blocks as many as the number of the blocks 343a from the designated copy source address 343b with referring to the rearrangement setting value register 343, compiles the read blocks, and writes the complied blocks to the copy destination address 343d.

In the step S59, the CPU 38 instructs the memory control circuit 28 or the IDE-I/F 20 to read out the RLCP arrangement stream. In a step S61, the CPU 38 instructs the network I/F 40 to transmit the read RLCP arrangement stream. More specifically, the CPU 38 instructs the network I/F 40 to transmit the RLCP arrangement stream with the registered resolution to the terminal in which the value of "resolution" is registered in the relevant cell of the table for reproducing 363. Then, the process proceeds to a step S63.

In this embodiment, the "high resolution" is registered in the terminal T1 cell 363a, and therefore, all the resolution levels (subbands 3LL-1HH) of the RLCP arrangement become to be transmitted to the terminal T1. If the "middle resolution" is registered, the resolution revels 1 and 2 (subbands 3LL-2HH) are transmitted, and if the "low resolution" is registered, the resolution level 1 (subbands 3LL-3HH) is transmitted.

In the step S63, the CPU 38 determines whether or not the SNR is designated in the view request. If the determination result is affirmative, the process proceeds to a step S65, and if the result is negative, the process is restored to an upper hierarchical routine. In the step S65, it is determined whether or not the LRCP arrangement stream of the designated image is stored in the SDRAM 26 or the HD 18a. If the determination result is negative, the process proceeds to a step S67, and if the result is affirmative, the process proceeds to a step S71.

In the step S67, the CPU 38 calculates the number of blocks to be rearranged on the basis of the table for reproducing 363. For example, with respect to the view request from the terminal T2, on the basis of the "low SNR" registered on the table for reproducing 363, only the highest order layer (3LL to 3HH belonging to the layer 1) of the LRCP stream arranged in Figure 6 (A) may be transmitted. Thus, the number of blocks to be rearranged becomes 10=10×1. If the "middle SNR" is registered, the layers 1 and 2 have to be transmitted, and therefore, the number of blocks to be rearranged becomes 20 =10 × 2. Similarly, if the "high SNR" is registered, the layers 1 to 3 have to be transmitted, and the number of blocks to be rearranged becomes 30 =10 × 3.

In a step 69, the CPU 38 instructs the memory control circuit 28 and the block rearrangement circuit 34 to execute the block rearrangement process. Then, the process proceeds to a step S71. It is noted that the block rearrangement process in the step S69 is the same as that in the above-described step S57.

In the step S71, the CPU 38 instructs the memory control circuit 28 or the IDE-I/F 20 to read the LRCP arrangement stream. In a step S73, the CPU 38 instructs the network I/F 40 to transmit the LRCP arrangement stream. More specifically, the CPU 38 instructs the network I/F 40 to transmit the LRCP arrangement stream with the registered SNR to the terminal in which the value of "SNR" is registered in the relevant cell of the table for reproducing 363. Then, the process is restored to an upper hierarchical routine.

In this embodiment, on the basis of the "low SNR" registered on the cell 363a for the terminal T2, only the layer 1 (subbands 3LL to 3HH belonging to the layer 1) of the LRCP stream is transmitted to the terminal 2. If the "high SNR" is registered, the layers 1-3 are transmitted, and if the "middle SNR" is registered, the layers 1 and 2 are transmitted.

As described above, in this embodiment, the JPEG 2000 codec 30 forms any one of the LRCP arrangement stream and the RLCP arrangement stream, and the block rearrangement circuit 34 copies the formed stream in a block unit, and rearranges the blocks to generate another stream. Thus, in comparison with a case where the JPEG 2000 codec generates both of the LRCP arrangement stream and the RLCP arrangement stream, a processing time is reduced, and therefore, an image reproducing is realized in a various image quality including both of the different resolutions and SNRs without comfortableness.

It is noted that the CPU 38 executes a rearrangement process in place of providing the block rearrangement circuit 34 dedicated for a rearrangement process as the above-described embodiment. In this case, the data buffer 342 and the rearrangement setting value register 343 are provided in the flash memory 36, for example. A program describing the rearrangement process is further stored in the program storing area 361, and according to this program, the CPU 38 executes the same operation as the rearrangement control circuit 341.

Furthermore, instead of performing the rearrangement at a time of transmitting a stream like this embodiment, both of the LRCP arrangement stream and the RLCP arrangement stream may be recorded in the HD18a. This method is effective in a case the HD18a has a large capacity. The processing example of the CPU38 in this case is as follows.

The CPU 38 determines whether or not an available capacity of the HD18a is equal to or more than a threshold value. If the determination result is affirmative, the CPU 38 records the LRCP arrangement stream and the RLCP arrangement stream on the HD 18a.

If the above-described determination result is affirmative, that is, if the available capacity of the HD18a is less than a threshold value, the CPU 38 determines whether or not the setting of the scalability 362d is the "resolution priority" with referring to the table for recording 362a (Figure 3). If the determination result is affirmative, the CPU 38 records the RLCP arrangement stream in the HD 18a, and if the result is negative, that is, if the result is the "SNR priority", the CPU records the LRCP arrangement stream in the HD18a.

At a time of an image transmission, the stream with the designated arrangement is read out from the HD 18a and is transmitted. It is appropriate that with respect to the image in which only one of the streams is recorded in the HD18a, the same transmission control as shown in Figure 14 may be performed.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A data processing apparatus, comprising:
an encoder for encoding input data to generate a first data block arrangement including a plurality of data blocks arranged in a first manner;
a rearranger for rearranging the data blocks forming said first data block arrangement to generate a second data block arrangement including a plurality of data blocks arranged in a second manner;
an accepter for accepting a transmission request of the data block arrangements;
a first determiner for determining which is requested by said transmission request, said first data block arrangement or said second data block arrangement; and
a transmitter for transmitting the data block arrangement depending on the determination result of said first determiner.

2. A data processing apparatus according to claim 1, further comprising
a recorder for recording on a recording medium said first data block arrangement encoded by said encoder, wherein
said rearranger executes a rearrangement depending on the determination result by said first determiner when accepting said transmission request.

3. A data processing apparatus according to claim 1, wherein said rearranger includes an extractor for extracting data blocks from said first data block arrangement in order of said second manner, and an arranger for arranging the data blocks extracted by said extractor from the top in order.

4. A data processing apparatus according to claim 3, further comprising
a second determiner for determining how many data blocks are requested by said transmission request, wherein
said rearranger controls the number of data blocks to be rearranged corresponding to the determination result by said second determiner.

5. A data processing apparatus according to claim 1, wherein said input data is still image data, and said encoder performs a hierarchical encoding on said still image data on the basis of a plurality of image quality parameters including a resolution and an SNR.

6. A data processing apparatus according to claim 5, wherein
said first data block arrangement is a data block arrangement subjected to the hierarchical encoding by regarding one of said plurality of image quality parameters as a top priority, and
said second data block arrangement is a data block arrangement subjected to the hierarchical encoding by regarding another of said plurality of image quality parameters as a top priority.

7. A data processing apparatus according to claim 5, wherein said hierarchical encoding complies with a JPEG 2000 codec.

8. A data processing apparatus according to claim 5, wherein said still image data is image data of a single screen forming a motion image.
